# EUROPÄISCHE PATENTANMELDUNG

(11) **EP 1 059 676 A2**
(43) Veröffentlichungstag der Anmeldung: **13.12.2000**
(21) Anmeldenummer: 00810492.9
(22) Anmeldetag: 06.06.2000
(51) Int. Cl.: H01L 31/048, H01L 31/18

(54) **Verfahren zum Reinigen, Schutzbehandeln und Feinbeschichten von Solarpanels, Verwendung einer Behandlungssubstanz hierfür, sowie schutzbehandelte und feinbeschichtete Solarpanels.**

(30) Priorität: 11.06.1999 CH 109599
(71) Anmelder: Fabrisolar AG, 8700 Küsnacht (CH); Durrer Systems Oberflächentechnik GmbH, 8700 Küsnacht (CH)
(72) Erfinder: Ringer, Remo, 8700 Küsnacht (CH); Leu, Sylvère, 8824 Schönenberg (CH)
(74) Vertreter: Felber, Josef

(57) **Zusammenfassung**

Das Verfahren beinhaltet, dass die Glasscheibenoberfläche des Solarpanels zunächst mit Cer-Dioxid, einem abrasiven, chemisch neutralen Mittel auf Wasserbasis mittels weissem Scotch-Brite eingerieben wird, bis sie von sämtlichen Verschmutzungsanhaftungen befreit ist. Nach dem Abwaschen der Verschmutzungen wird die Glasoberfläche mit einer Gummilippe abgezogen und trockengerieben. Hernach wird Crystal Guard (Handelsname) der Chemetall GmbH, Reuterweg 14, D-60271 Frankfurt am Main aufgebracht. Die Erfindung betrifft auch die prinzipielle Verwendung von Crystal Guard (Handelsname) zur Beschichtung von Oberflächen, Siliziumverbindungen enthalten, sowie Solarpanels für die photovoltaische Erzeugung von elektrischer Energie, die eine Glasoberfläche aufweisen, welche eine Feinbeschichtung aus Crystal Guard (Handelsname) tragen. Die Beschichtung hält die Panels sauber, lässt sie leicht reinigen und erhöht ihren photovoltaische wirkungsgrad und den jährlichen Wirkungsgrad.

## Beschreibung

Die vorliegende Erfindung betrifft ein Verfahren zum Reinigen, Schutzbehandeln und Feinbeschichten von Solarpanels, zur Erreichung einer wieder neuwertigen Oberfläche und einer Erhöhung der Effizienz von Solarpanels, dann weiter auch die grundsätzliche Verwendung einer bekannten Substanz zur Behandlung von Solarpanels wie schliesslich die derart schutzbehandelten und feinbeschichteten Solarpanels an sich.

Solche Solarpanels bestehen meist aus einer Glasscheibe aus 3-12 mm starkem Einscheiben-Sicherheitsglas ESG vom Typ extraweiss oder AFG. Extraweisses Glas enthält kein Eisen und weisses Glas ist zumindest arm an Eisen, was für die hohe Durchlässigkeit von grosser Bedeutung ist. Auf der Rückseite dieser Glasscheibe sind die photoelektrischen Solarzellen aufgebracht. Zum Einsatz kommen zum Beispiel kristalline oder amorphe Zellen. Diese werden nebeneinander angeordnet auf die Glasscheibe aufgebracht und mit Ethylen-Vinyl-Acetat (EVA) oder ähnliche Klebstoffe von einer Schichtdicke von 50µm bis 70µm eingegossen, welche noch von einer rückseitigen teflonartigen Schicht Tedlar™ oder Glas überzogen ist. Das so aufgebaute Sandwich wird in einem Ofen unter Vakuum während ½ bis 1 Stunde auf 150°C erhitzt und mit einem Druck von rund 1'000 bar zusammengepresst. Durch die Wärmeeinwirkung erfolgt eine Polymerisation, das heisst es entstehen längere Polymere (Molekülketten), wodurch die Solarzellen auf der Glasscheibe aufkaschiert und eingegossen werden. Da diese Solarpanels infolge des Baumaterials und ihres Aufbaus recht verletzlich sind, dürfen sie bloss um ca. ¹/₇₀ ihrer Gesamtlänge durchgebogen werden. Um diese Solarpanels geschützt und sicher auf einem Gebäude-Flachdach zu montieren, werden sie herkömmlich in einen Aluminiumrahmen eingelegt. Dieser Aluminiumrahmen ist ca. 30-50mm stark und somit recht verwindungsstabil. Die Solarpanels können aber auch rahmenlos installiert werden. Das Problem besteht nun darin, dass die Glasoberfläche mit der Zeit verschmutzt und namentlich im Falle von eingerahmten Panels in der Rinne, die vom unteren Rahmen gebildet wird, sich Wasser und Schmutz ansammelt, wobei das Wasser in den Trockenperioden immer wieder verdampft und die Schmutzpartikel zurücklässt. Die Witterungseinflüsse, denen die Solarpanel-Oberflächen ausgesetzt sind, wirken sich erheblich auf deren Effizienz aus. Die Panels werden ja in der Sommersonne stark erhitzt, im Winter auf tiefe Temperaturen abgekühlt und auch im Tagesverlauf treten erhebliche Temperaturdifferenzen zwischen Tag und Nacht auf. Hinzu kommen die Niederschläge in Form von Schnee, Regenwasser, Hagel und Eisregen, und im Winter die mechanische Beanspruchung durch Eis und Schneelasten. Ein sehr gravierender Faktor ist schliesslich die Staub-, Laub- und Russfracht der Luft, die je nach Windverhältnissen und Standort der Panels ganz unterschiedlich ist. Panels, die zum Beispiel in der Nähe von Eisenbahnlinien oder Industrieanlagen installiert sind, verschmutzen sehr viel rascher als etwa solche in ländlichen Wohngebieten. Dort wird man dafür eher Verschmutzungen durch Blätter, Nadeln, Blütenstaub etc. haben. Weil beschlagene Solarpanelscheiben schon 2 Jahre nach ihrer Neumontage einen Teil ihrer Effizienz einbüssen, und eingedenk der Tatsache, dass Solarstrom teurer als Kraftwerkstrom ist, drängt sich eine regelmässige Reinigung der Solarpanelscheiben auf. Wünschbar wäre es, wenn die Solarpanelscheiben weniger oft gereinigt werden müssten, und wenn schon, dass ihre Reinigung leichter vonstatten ginge. Ausserdem wird jede Steigerung deren Effizienz begrüsst, egal mit welchen Massnahmen die Energieausbeute erhöht werden kann. Diese ist ja letztlich ein Mass dafür, wieviel Strom aus der von der Sonne eingestrahlten Energie erzeugt werden kann.

Es ist daher die Aufgabe der vorliegenden Erfindung, ein Verfahren zum Reinigen, Schutzbehandeln und Feinbeschichten von Solarpanels anzugeben, wobei die Schutzbehandlung deren Verschmutzung stark verringern soll und gleichzeitig die photovoltaische Effizienz der Panels steigern soll, sowie die Verwendung einer bekannten Substanz für Oberflächenbeschichtungen anzugeben, welche diese Effekte begünstigt, und schliesslich ist es eine Aufgabe dieser Erfindung, ein derartig schutzbehandeltes und feinbeschichtetes Solarpanel zu schaffen.

Diese Aufgabe wird gelöst von einem Verfahren zum Reinigen, Schutzbehandeln und Feinbeschichten von Solarpanels zur Erreichung einer wieder neuwertigen Oberfläche und einer Erhöhung der Effizienz von Solarpanels, die eine ebene oder texturierte Oberfläche aus Substraten, welche Siliziumverbindungen enthalten, und die gegebenenfalls eingerahmt sein können, dadurch gekennzeichnet, dass
a) die Glasscheibenoberfläche mit Oxyden seltener Erden, einem abrasiven, chemisch neutralen Mittel unter Beigabe von Wasser mittels weissem Scotch-Brite eingerieben wird, bis sie von sämtlichen Verschmutzungsanhaftungen befreit ist,
b) die Verschmutzungen mit Wasser abgewaschen werden;
c) die Glasoberfläche mit einer Gummilippe abgezogen und trockengerieben wird;
d) auf die Glasoberfläche Crystal Guard (Handelsname) der Chemetall GmbH, Reuterweg 14, D-60271 Frankfurt am Main beschichtet wird;
e) die verbleibenden Rückstände nach der Behandlung mit Wasser abgewaschen werden.

Des Weiteren löst die Erfindung die Aufgabe mit der Verwendung von Crystal Guard (Handelsname) der Chemetall GmbH, Reuterweg 14, D-60271 Frankfurt am Main zur Beschichtung von Glasoberflächen von Solarpanels.

Schliesslich löst die Erfindung die Aufgabe mit einem Solarpanel für die photovoltaische Erzeugung von elektrischer Energie, mit Glasoberfläche und darunter angeordneten photoelektrischen Solarzellen, dadurch gekennzeichnet, dass die Glasoberfläche eine Feinbeschichtung aus Crystal Guard (Handelsname) aufweist, mit gesättigter chemischer Reaktion der Polysiloxane des Crystal Guard mit dem durch die Beschichtung erreichbaren Silizium des Glases.

Nachfolgend wird die Erfindung genauer beschrieben und die verschiedenen Aspekte der Erfindung in bezug auf Applikation, Verwendung und Wirkung von Crystal Guard beim Feinbeschichten von Solarpanel-Glas werden erläutert.

Um die Energieausbeute von Solarpanels zu optimieren, müssen diese in horizontaler bis vertikaler Lage montierbar sein, sodass ein möglichst grosses Mass an Sonneneinstrahlung gewährleistet ist. Dass ihre Oberflächen deswegen grundsätzlich nach oben gerichtet sind, bedeutet aber auch, dass diese stark verschmutzen. Jede Verschmutzung beeinträchtigt natürlich den Strahlengang und somit die Effizienz der Solarpanels. Sie müssen deshalb regelmässig gereinigt werden. Das Reinigen hat sich als aufwendig erwiesen, und oft können dabei auch Fehler gemacht werden, indem nicht geeignete Reinigungsmittel eingesetzt werden, zum Beispiel saure oder basische, oder stark abrasive, sodass die Solarpanels oder deren Randabschlüsse Schaden nehmen und damit ebenfalls eine Verschlechterung der Effizienz der Panels einhergeht. Abhilfe kann hier geschaffen werden, indem die Glasoberflächen der Solarpanels so behandelt werden, dass sie stark hydrophob sind und diese während Jahren auch bleiben. Damit wird erreicht, dass Schmutz gleich welcher Art nicht mehr an der Oberfläche anhaften kann, und bei jedem Regen der Staub, der auf den Scheibenoberflächen liegen mag, sauber weggeschwemmt wird. Selbst wenn Schmutz auf der Scheibenoberfläche liegenbleibt, auch wenn er nicht daran haftet, so kann er nötigenfalls mit einer einfachen Reinigung rasch und mühelos weggewischt werden, eben, weil er nicht an der Oberfläche haftet.

Auf dem Markt gibt es ein Produkt namens Crystal Guard. Dieses ist Gegenstand des Europäischen Patentes Nr. 0'783'464 der Metallgesellschaft AG, Reuterweg 14, D-60323 Frankfurt am Main, veröffentlicht am 16. Juli 1997. Der Titel des Patentes lautet: Mischung zum Behandeln von siliziumhaltigen Substraten. Das Produkt Crystal Guard wird von der Chemetall GmbH, Reuterweg 14, D-60271 Frankfurt am Main hergestellt und vertrieben. Es handelt sich dabei um eine Mischung, welche aus einer Komponente A besteht, die von mindestens einem Polysiloxan gebildet wird, das Si-H-Bindungen enthält, aus einer Komponente B, die von mindestens einem bi-, tri- oder tetrafunktionellen Silan gebildet wird, wobei ein Alkoxy- oder ein CH₃COO-Rest als funktionelle Gruppe wirkt, und aus einer Komponente C, die von mindestens einer starken, wasserfreien organischen oder anorganischen Säure gebildet wird. Diese Mischung wir vorteilhaft mit einem Lösungsmittel auf Substrate aufgebracht, die siliziumhaltig sind, also zum Beispiel auf Glas oder Keramik. Sie erzeugt dort eine dichte, dünne Schicht, die stark auf den siliziumhaltigen Substraten haftet und daher eine gute mechanische Abriebfestigkeit hat, und sie verleiht der beschichteten Oberfläche hydrophobe Eigenschaften. Die Mischung enthält weiter ein Lösungsmittel, und wenn sie auf die zu behandelnde Oberfläche aufgebracht wird, verdampft das Lösungsmittel rasch und gleichzeitig erfolgt die Bildung eines Harzes aus den Komponenten A und B, das mit fortschreitender Polymerisation und Vernetzung der Komponenten aushärtet und ausserdem auf dem Substrat durch Bildung von Si-O-Si-Bindung verankert wird. Unter dem Einfluss der Komponente C werden Si-H-Bindungen der Komponente A durch das in der Atmosphäre befindliche und auf dem Substrat oberflächlich adsorbierte bzw. gebundene Wasser unter Bildung von Wasserstoff und Si-OH-Gruppen hydrolysiert, die ihrerseits unter dem Einfluss der Komponente C mit den funktionellen Alkoxy- oder CH₃COO-Resten der Komponente B unter Bildung von Alkoholen oder Essigsäure reagieren. Dabei werden die Komponenten A und B über Si-O-Si-Bindungen miteinander verknüpft und in der Oberfläche sowie räumlich miteinander vernetzt und bilden eine durchgehende Schicht. Die Komponente C, die gebildeten Alkohole sowie die gebildete Essigsäure und nicht in das Harz eingebundene Reaktionspartner sowie Nebenprodukte können nach Trocknung und Aushärtung des Harzes mit Wasser von der Beschichtung abgespült werden. Dem Wasser kann hierzu gegebenenfalls ein Benetzungsmittel und/oder Alkalihydroxid zugesetzt werden.

Bisher werden vorwiegend Glasfassaden und Glasdächer mit dieser Mischung behandelt. Zur Vorbehandlung werden die Glasoberflächen mit einem speziellen stark alkalischen Glasreiniger gereinigt. Weil man bisher davon ausging, dass diese Reinigung mit einem stark alkalischen Glasreingier für die Beschichtung mit Crystal Guard unabdingbar sei, wurde nie erwogen, auch Solarpanels mit Crystal Guard zu beschichten. Solarpanels dürfen nämlich keinesfalls mit sauren oder alkalischen Mitteln in Berührung kommen. Man würde sonst unweigerlich deren teflonartige Einfassung zerstören. Niemand will natürlich das Risiko eingehen, teure Solarpanels bloss wegen einer Reinigung und Schutzbeschichtung zu zerstören. Nun hat sich aber überraschend gezeigt, dass sich als Vorbehandlung eine Reinigung mit Cer-Dioxid hervorragend eignet. Cer-Dioxid ist ein abrasives, chemisch aber völlig neutrales Mittel auf Wasserbasis. Es ist aber wichtig, dass es nach dem Applizieren auf die Solarpanel-Glasoberfläche ausschliesslich, das heisst nur und nur mit mittels weissem Scotch-Brite eingerieben wird, bis die Oberfläche von sämtlichen Verschmutzungsanhaftungen befreit ist. Scotch-Brite ist eine Wirkware der Firma 3M und der Typ weisses Scotch-Brite gewährleistet, dass die Glasoberfläche in keiner Weise zerkratzt wird, auch nicht im Mikrobereich. Nachdem die Verschmutzungen weggerieben sind, können sie mit blossem Wasser abgewaschen werden. Anschliessend zieht man die Glasoberfläche mit einer Gummilippe ab und reibt sie mit einem Lappen trocken. Die in dieser Weise vorbehandelte Glasscheibe wird nun mit Crystal Guard (Handelsname) der Chemetall GmbH, Reuterweg 14, D-60271 Frankfurt am Main beschichtet. Hierzu kann eine Fein-Beschichtungs-Spritzanalge eingesetzt werden. Man kann also das sehr dünnflüssige Crystal Guard auf die zu behandelnde Oberfläche einfach aufspritzen. Als Alternative ist auch das Aufrollen mit einer Malerrolle oder das einfache Aufpinseln möglich. Unmittelbar beim oder nach dem Auftragen verdampft das Heptan in der Mischung, und die Polysiloxane bleiben liegen. Diese reagieren sodann chemisch mit dem Silizium im behandelten Material und bewirken eine Polymerisation. Bei 15°C Aussentemperatur zum Beispiel ist der Reaktionsprozess in ca. 45 Minuten abgeschlossen und es hat sich eine durchgehende Schicht von einer Dicke von wenigen Molekülen gebildet, die äusserst hydrophob ist. Nach einer guten Stunde weisen die Solarpanels hinfort einen sehr hohen Selbstreinigungsgrad auf. Erstens können Schmutzpartikel nicht mehr an ihrer Oberfläche haften und werden bei jeder Beregnung zuverlässig weggeschwemmt, und wenn über eine lange Zeit doch Verschmutzungen liegenbleiben, so lassen sich diese einfach und mühelos wegwischen. Es wird erwartet, dass eine solche Beschichtung an einem Solarpanel ca. 10 Jahre hält und sie weitgehend sauber hält.

Ein Teil der Erfindung betrifft daher einfach die Verwendung dieser Mischung Crystal Guard (Handelsname) der Chemetall GmbH, Reuterweg 14, D-60271 Frankfurt am Main zur Beschichtung der Glasoberfläche von photovoltaischen Solarpanels.

Schliesslich ist eine weiterer Gegenstand der Erfindung grundsätzlich ein Solarpanel für die photovoltaische Erzeugung von elektrischer Energie, das eine Glasoberfläche und unter der Glasscheibe angeordnete photoelektrische Solarzellen aufweist, die in Schichten von Ethylen-Vinyl-Acetat (EVA) von einer Dicke von 50µm bis 70µm eingegossen sind, wobei das Panel auf seiner Unterseite von einer teflonartigen Schicht Tedlar™ oder Glas eingefasst ist. Derartige Solarpanels sind erfindungsgemäss mit einer Feinbeschichtung aus Crystal Guard (Handelsname) versehen, welche eine gesättigte chemische Reaktion ihrer Polysiloxane mit dem Silizium des Glases hinter sich hat.

Derart beschichtete Solarpanels weisen eine höhere photovoltaische Effizienz zunächst einmal deshalb auf, weil ihre Glasoberfläche stets sauber bleibt und sich bei Regen selbst reinigt. Dadurch haben die Scheiben stets eine sehr hohe Durchdringung und einen verbesserten Frequenzgang. Die Sonne strahlt ja ein grosses Spektrum von Frequenzen ein, unter anderem UV- und IR-Strahlung. Für die Photovoltaik von grösstem Interesse sind die Frequenzen der IR-Strahlung und die Winkelabhängigkeit der Einstrahlung. Die Solarpanels werden infolge der Umwandlung eines wesentlichen Teils der eingestrahlten Energie in elektrischen Strom weniger stark erwärmt als wenn sie im Leerlauf arbeiten. Je besser die Effizienz der Solarpanels also ist, umso weniger stark erwärmen sie sich und umso höher ist der Wirkungsgrad. Man hat festgestellt, dass die Glasoberfläche eines Solarpanels pro cm² bis zu ca. 30'000 Fehlerstellen aufweist, die natürlich für das Licht viele Beugungseffekte zur Folge haben, gerade wenn das Sonnenlicht flach einfällt. Unter dem Mikroskop sieht die Oberfläche wie eine Kraterlandschaft aus, sodass unweigerlich Streuungs- und Beugungseffekte auftreten müssen, die sich nachteilig auf die Durchdringung der Glasscheibe auswirken. Durch die Beschichtung lässt sich die Glasoberfläche quasi ebnen und somit diese Effekte reduzieren. Durch die Beschichtung der Solarglas-Oberfläche mit Crystal Guard wird daher die Durchlässigkeit des Glases verändert, sodass das Frequenzspektrum, über welches die photovoltaische Solarzelle das eingestrahlte Sonnenlicht umwandeln kann, über einen grösseren Spektrumsbereich das Abdeckglas durchdringt, und somit die Effizienz der Solarzelle insgesamt gesteigert wird.

## Patentansprüche

1. Verfahren zum Reinigen, Schutzbehandeln und Feinbeschichten von Solarpanels zur Erreichung einer wieder neuwertigen Oberfläche und einer Erhöhung der Effizienz von Solarpanels, die eine ebene oder texturierte Oberfläche aus Substraten, welche Siliziumverbindungen enthalten, die gegebenenfalls eingerahmt ist, *dadurch gekennzeichnet,* dass
a) die Glasscheibenoberfläche mit Oxyden seltener Erden, einem abrasiven, chemisch neutralen Mittel unter Beigabe von Wasser mittels weissem Scotch-Brite eingerieben wird, bis sie von sämtlichen Verschmutzungsanhaftungen befreit ist,
b) die Verschmutzungen mit Wasser abgewaschen werden;
c) die Glasoberfläche mit einer Gummilippe abgezogen und trockengerieben wird;
d) auf die Glasoberfläche Crystal Guard (Handelsname) der Chemetall GmbH, Reuterweg 14, D-60271 Frankfurt am Main beschichtet wird;
e) die verbleibenden Rückstände nach der Behandlung mit Wasser abgewaschen werden.

2. Verwendung von Crystal Guard (Handelsname) der Chemetall GmbH, Reuterweg 14, D-60271 Frankfurt am Main zur Beschichtung von Glasoberflächen von Solarpanels.

3. Solarpanel für die photovoltaische Erzeugung von elektrischer Energie, mit Glasoberfläche und darunter angeordneten photoelektrischen Solarzellen, *dadurch gekennzeichnet,* dass die Glasoberfläche eine Feinbeschichtung aus Crystal Guard (Handelsname) aufweist, mit gesättigter chemischer Reaktion der Polysiloxane des Crystal Guard mit dem durch die Beschichtung erreichbaren Silizium des Glases.
